Europäisches Patentamt

European Patent Office

Office européen des brevets

(11) Veröffentlichungsnummer: **0 340 692**
**A1**

## (12) EUROPÄISCHE PATENTANMELDUNG

(21) Anmeldenummer: **89107833.9**

(22) Anmeldetag: **29.04.89**

(51) Int. Cl.⁴: **E01C 23/14 , E01H 5/10 , F24H 3/04**

(30) Priorität: **03.05.88 DE 3814895**

(43) Veröffentlichungstag der Anmeldung:
**08.11.89 Patentblatt 89/45**

(84) Benannte Vertragsstaaten:
**AT CH FR GB LI NL SE**

(71) Anmelder: **Koch, Christian, Dr.-Ing.**
**Schulstrasse 8**
**D-8602 Buttenheim(DE)**

(72) Erfinder: **Koch, Christian, Dr.-Ing.**
**Schulstrasse 8**
**D-8602 Buttenheim(DE)**

(54) **Strassentrocknungsgerät.**

(57) Die Erfindung betrifft ein Verfahren und eine Vorrichtung (1) zur Trocknung, Erwärmung und Enteisung von Freiluftflächen mit einem mobilen Warmluftgebläse (2), aus der die Warmluft mit einer Spezialdüse (15) mit hoher Geschwindigkeit und einstellbarer Temperatur ausgeblasen und mit einem Öl- oder Gasgebläsebrenner (7) erzeugt und zur Temperatureinstellung mit Frischluft anteilig gemischt wird.

EP 0 340 692 A1

Fig. 2

## Straßentrocknungsgerät

Die Erfindung betrifft ein Verfahren und eine Vorrichtung zum Trocknen, Auftauen und Erwärmen von Straßen, Landebahnen und Baustellen durch Warmluft mit einem breitgefächerten Luftstrom hoher Strömungsgeschwindigkeit und Temperatur.

Es ist bekannt, Freiluftflächen durch Zugabe von Chemikalien aufzutauen oder durch Strahler zu erwärmen. Diese Methoden haben den Nachteil, daß sie die Umwelt durch die Zusätze belasten oder eine geringe Effektivität des Wärmeeinsatzes für die Aufgaben der Trocknung oder Erwärmung haben. Es wird keine transportierende Wirkung auf die störenden Stoffe, wie Nässe oder Schnee ausgeübt. Die immer wirksameren und leistungsfähigeren Maschinen des Straßenbaus und die immer höhere Auslastung der Flughäfen erfordern eine sehr wirksame Behandlung von Flächen, sodaß in kurzer Zeit diese getrocknet, aufgetaut oder erwärmt werden müssen.

Es wurde nun überraschenderweise gefunden, daß ein flach über dem Boden ausgeblasener breiter Warmluftstrahl mit hoher Geschwindigkeit eine verblüffende Wirkung hat. Die warme Luft wird durch die Sogwirkung, die sich im Geschwindigkeitsunterschied zwischen dem starren Boden und der schnell strömenden Luft über dem Boden bildet, von dem Boden angezogen, sodaß sich die breite Warmluftströmung relativ lange auf dem Boden hält. Die Verweildauer bzw. Verweillänge ist so groß, daß die in der mit hoher Geschwindigkeit austretenden Warmluft enthaltene Wärme sich mit hohem Wirkungsgrad zur Erwärmung des Untergrundes überträgt und die Strömung auch für einen Abtransport der überflüssigen Feuchtigkeit, Schnee o.ä. ausgenutzt wird. Dieser Effekt wird noch weiter verstärkt, wenn die austretende Strömung durch die Fokusierung in einer flachen Venturidüse stabilisiert wird.

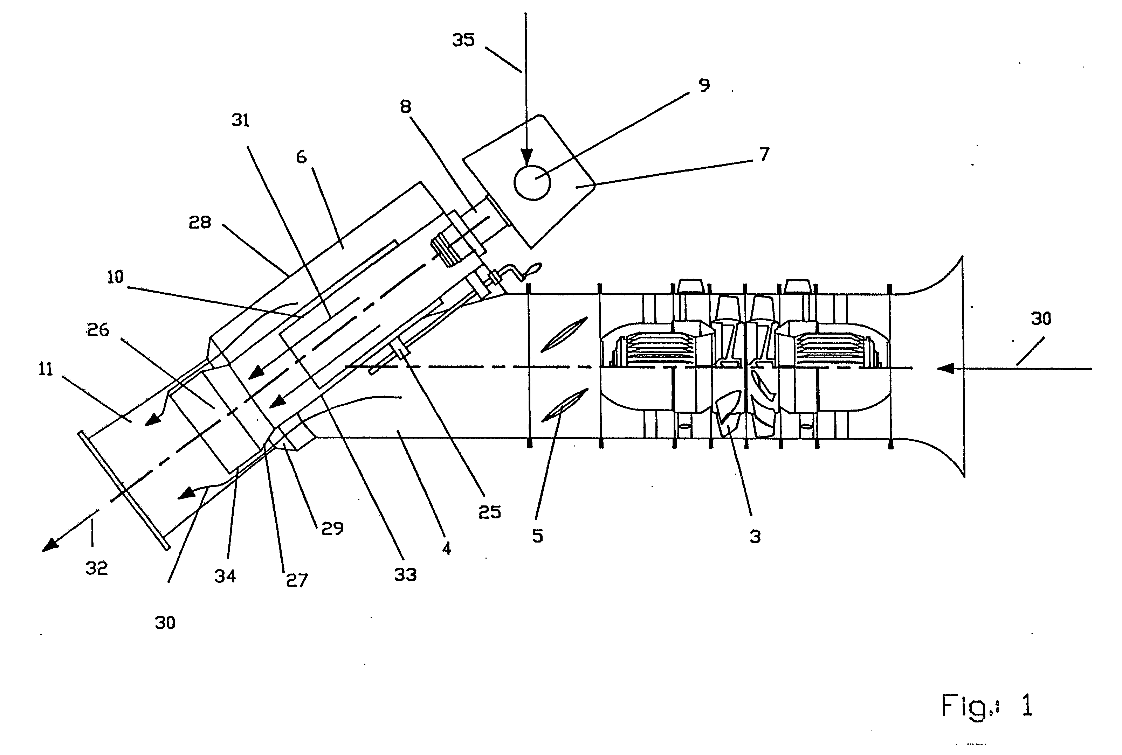

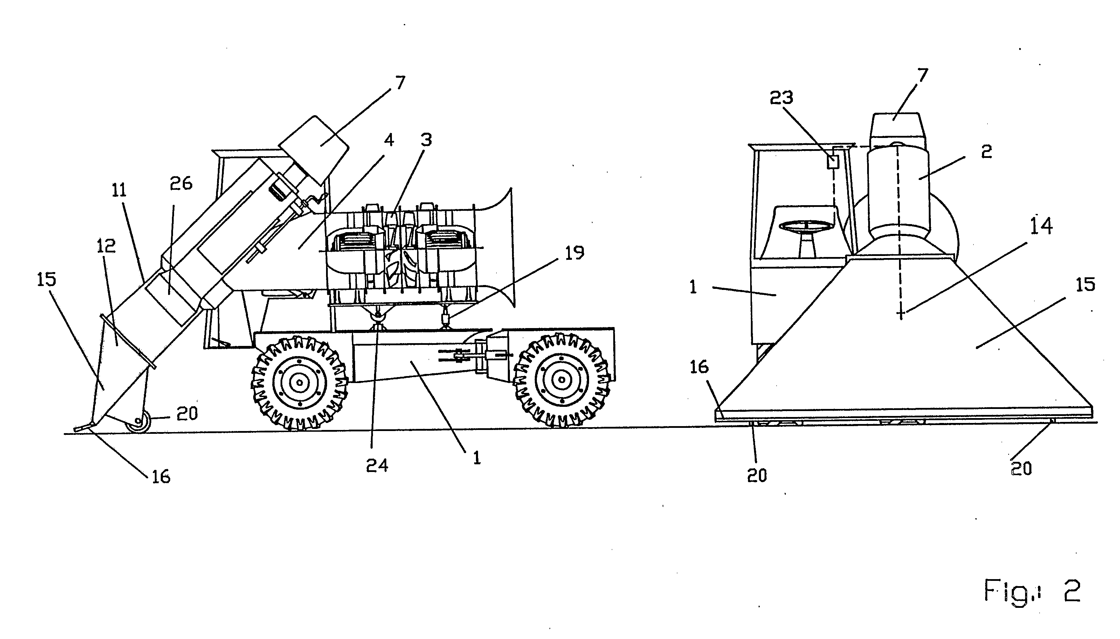

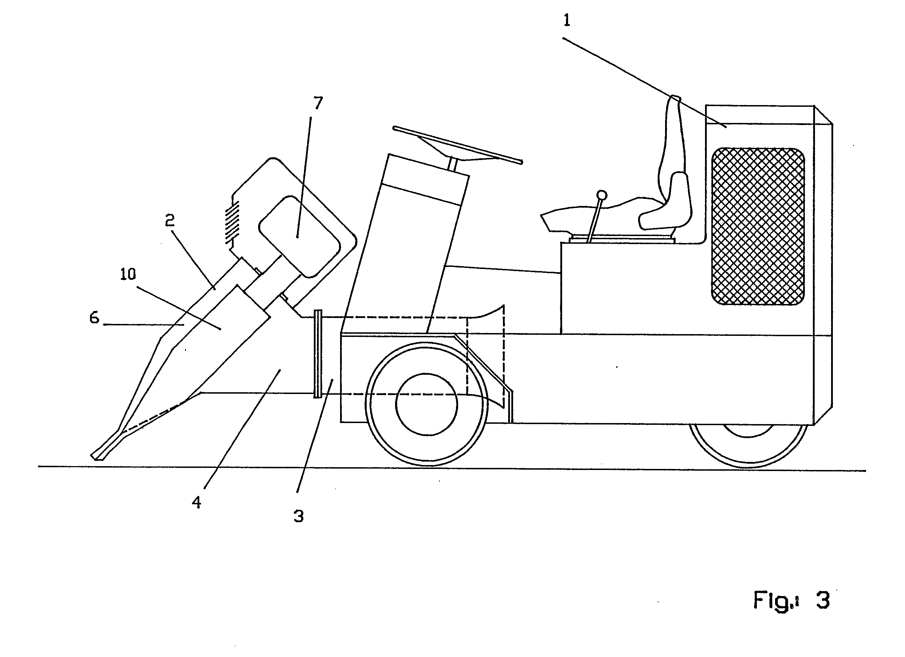

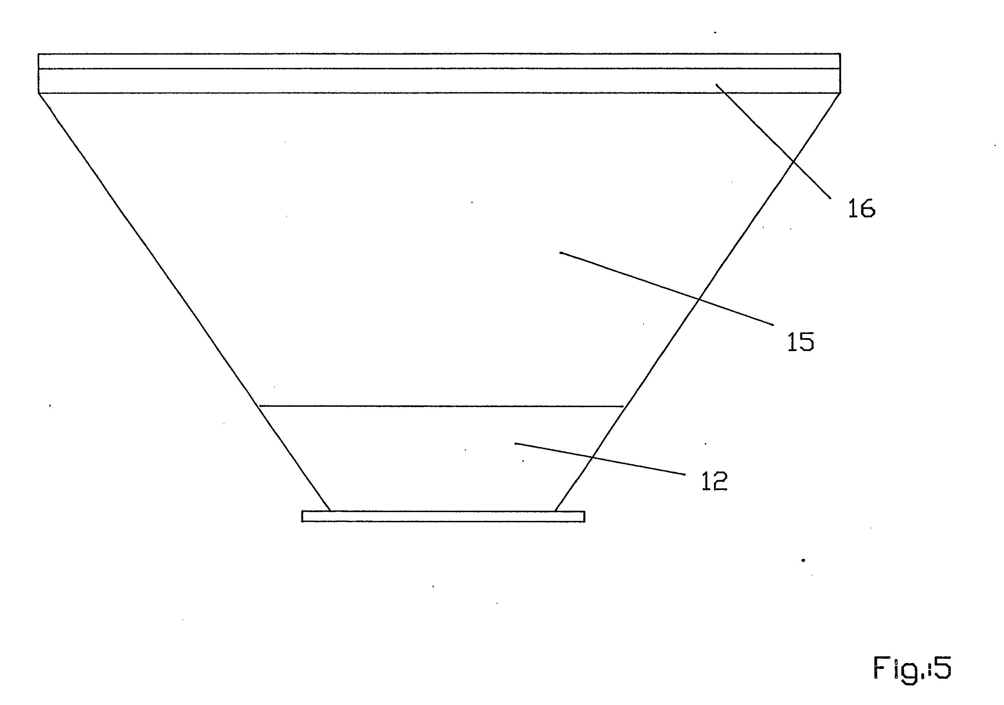

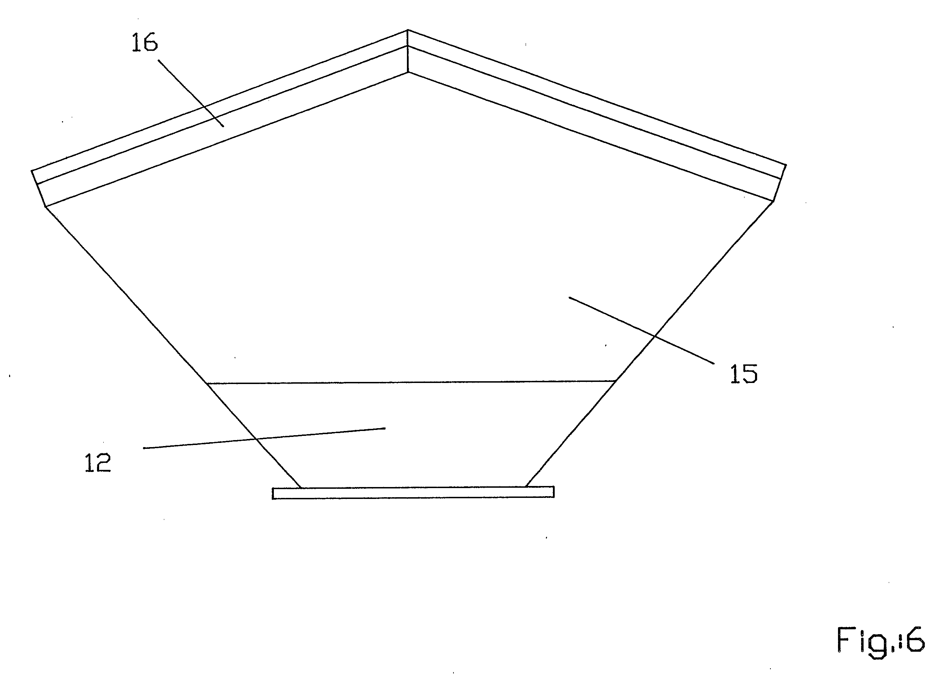

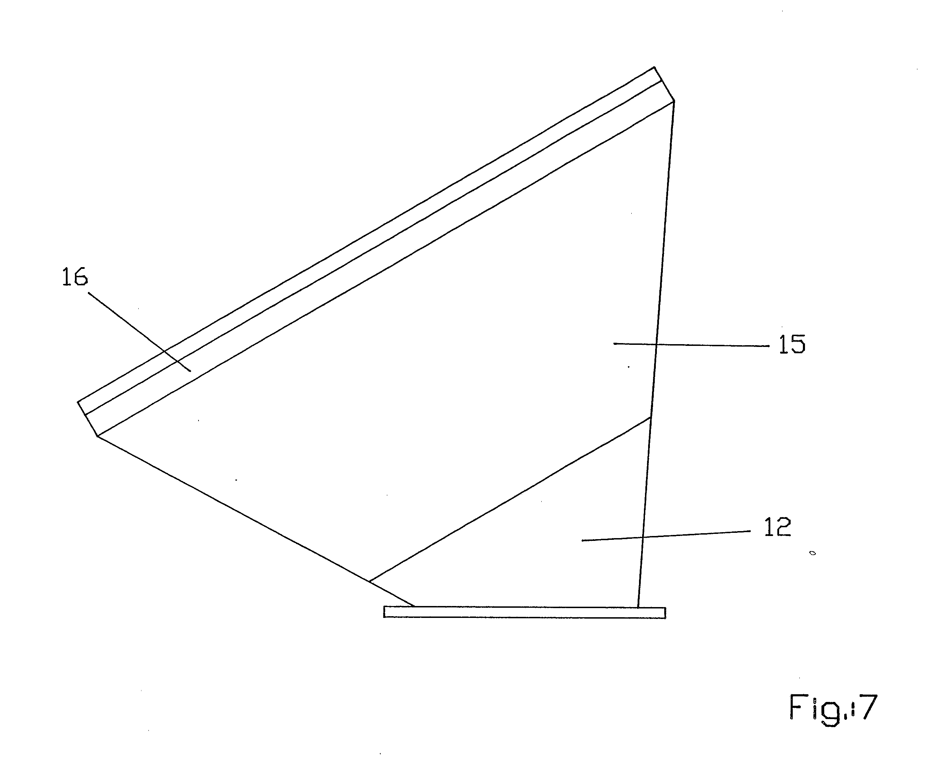

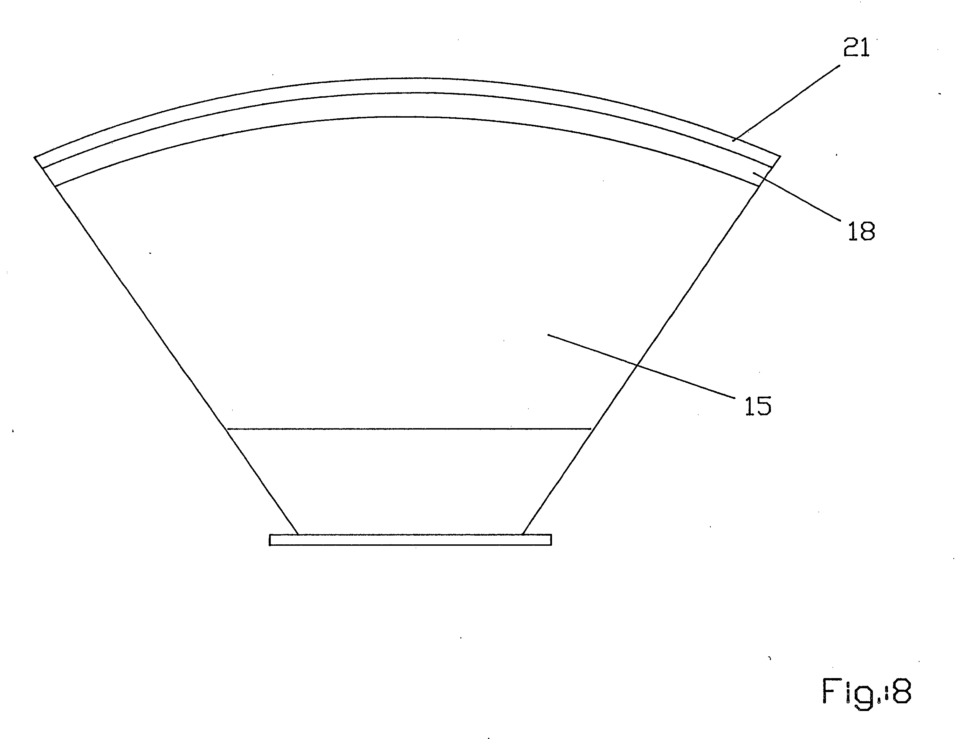

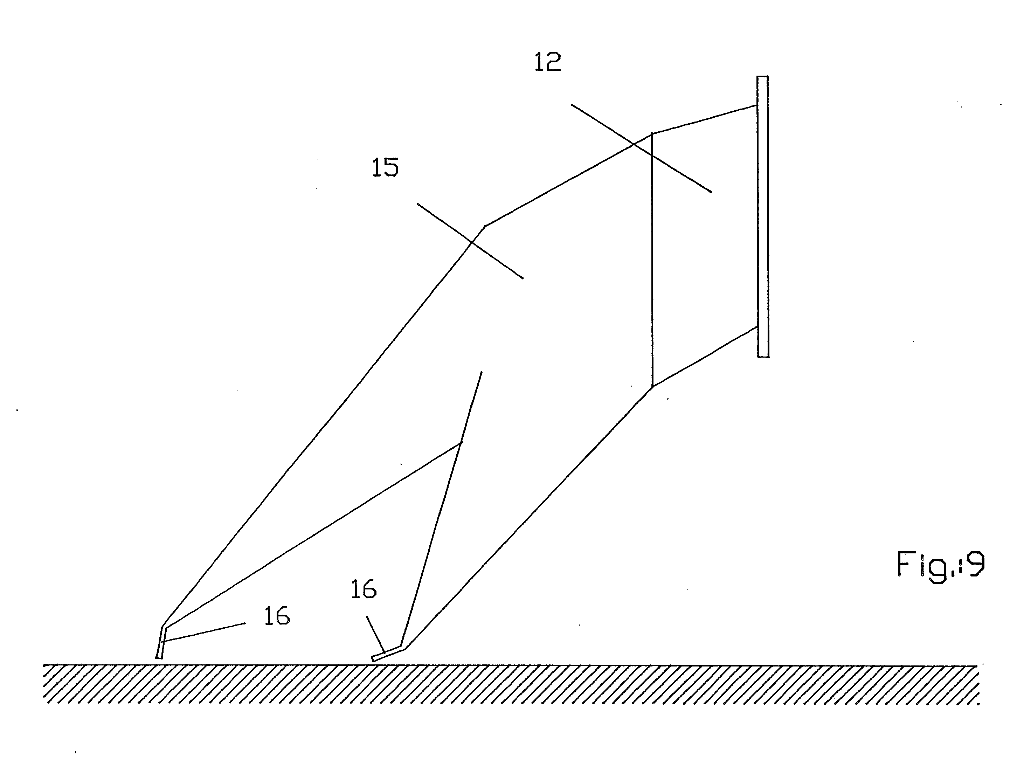

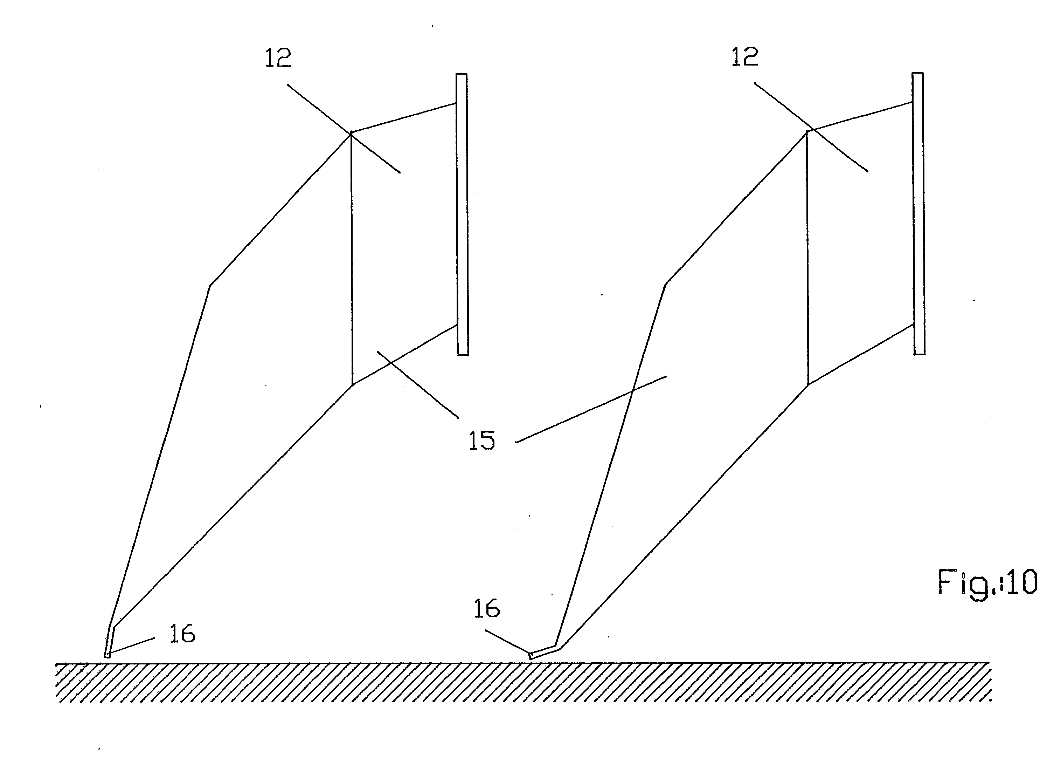

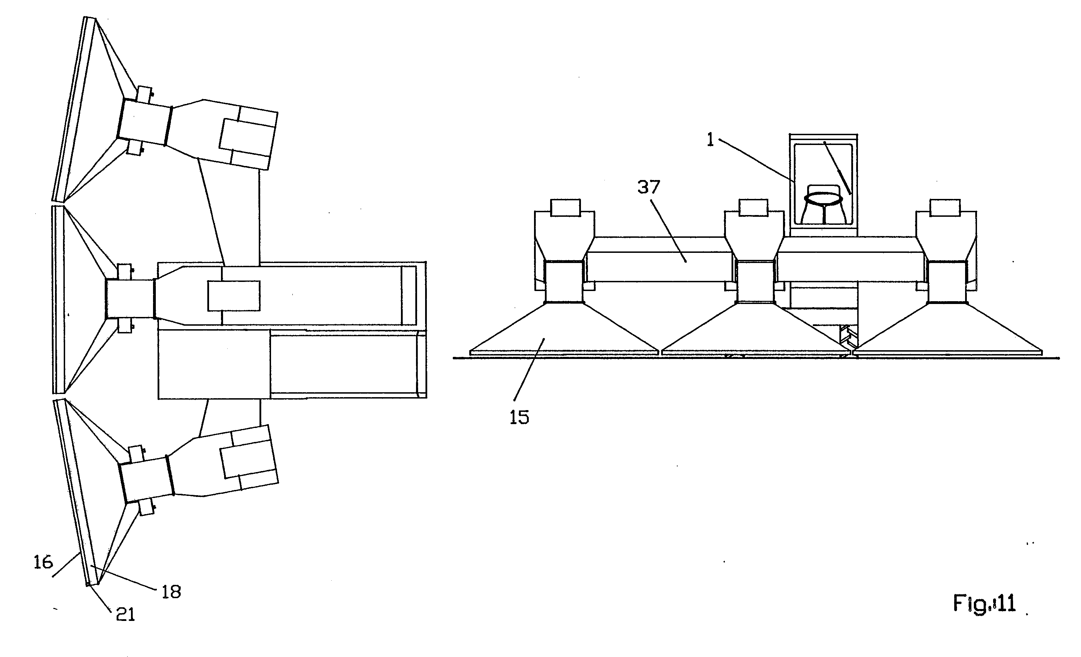

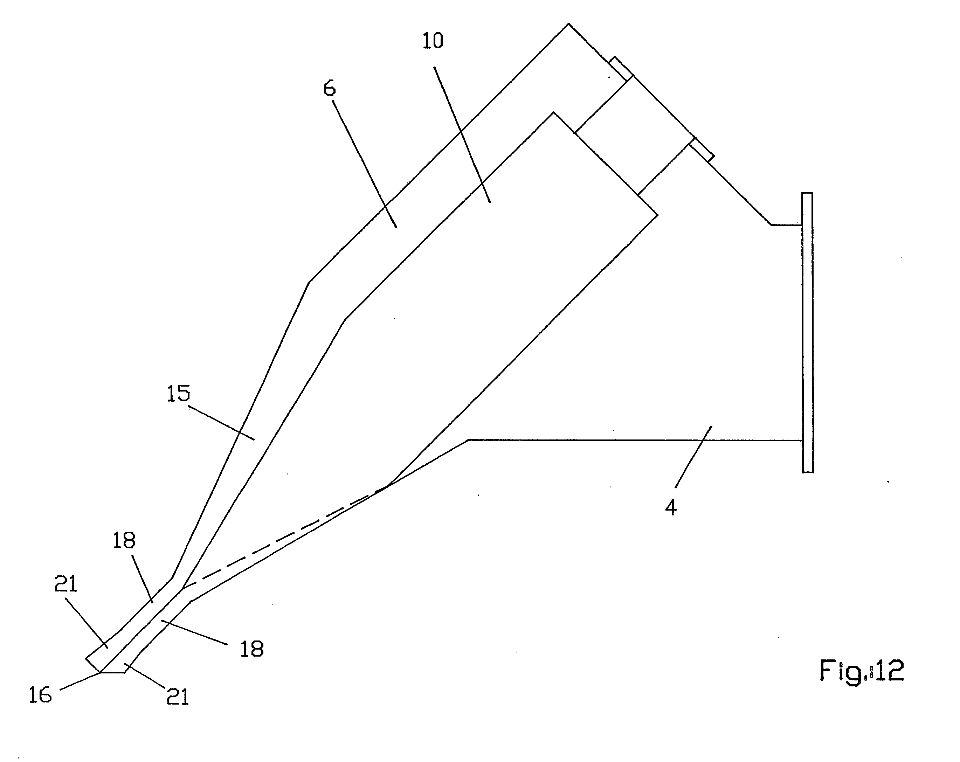

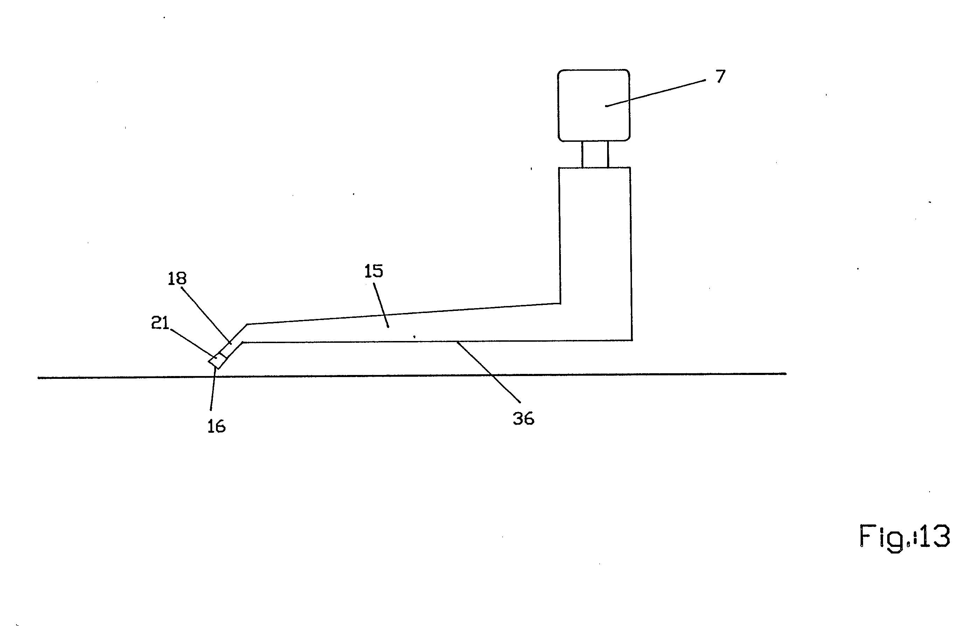

Diese überraschenden physikalischen Wirkungen führen zu einem Verfahren und einer Vorrichtung, die die Aufgabe der Erwärmung der Unterlage durch Warmluft, die aus einer flachen und breiten Düse mit hoher Geswchwindigkeit austritt, optimal erfüllen. Die Figuren 1 bis 13 zeigen das erfindungsgemäße Verfahren und die Vorrichtung sowohl auf einem Trägerfahrzeug als auch separat als Einzelteilzeichnung. Mit (1) ist das Trägerfahrzeug der Warmluftdüse bezeichnet. Die Warmluft wird in der Warmluftmischeinrichtung (2) erzeugt. Dazu ist ein Gebläse (3) in einem mittig zum Hüllrohr (28) der Warmluftmischeinrichtung (2) liegenden Zufuhrstutzen (4) angeordnet. Die Regelung des Frischluftstromes (30) durch das Gebläse (3) erfolgt entweder durch eine dem Gebläse (3) nachgeschaltete Drosselklappe (5) oder durch ein Gebläse, das den Luftstrom durch Veränderung der Drehzahl oder der Flügelstellung variieren kann. Der Frischluftstrom (30) strömt durch das Gebläse (3) und den Zufuhrstutzen (4) in die Warmluftmischeinrichtung (2) schräg von unten ein. Zentrisch an der Warmluftmischeinrichtung (2) ist auf der einen Seite der Brenner (7), auf der anderen Seite die Heißluftdüse (15) angeflanscht. In der Warmluftmischeinrichtung (2) ist brennerseitig das Brennkammerrohr (10), dessen Brennkammerkopf (26) in den Diffusor (11) mündet, angeordnet. Das Brennkammerrohr (10), in das das Brennerrohr (8) des Gebläsebrenners (7) hineinragt, bewirkt, daß einerseits die Flamme aus dem Brenner (7) unter kontrollierbaren Verhältnissen ausbrennt, andererseits die das Brennkammerrohr (10) umströmende Frischluft (30) nach dem Gebläse (3) vorgewärmt wird. Am Ende des Brennkammerrohres (10) befindet sich der Brennkammerkopf (26), der über eine Verstelleinrichtung (25) axial auf dem Brennkammerrohr (10) beweglich ist. Der Brennkammerkopf (26) wird einmalig so über die Einstellvorrichtung (25) eingestellt, daß der Ringspalt, der zwischen der Einschnürung (29) des Hüllrohres (28) und dem konischen Teil des Brennkammerkopfes (27) entsteht, die Querschnittsfläche erhält, durch die der Frischluftstrom (30) so beschleunigt wird, daß der am Ende des Brennkammerkopfes (26) für den erforderlichen Unterdruck zur Absaugung der Verbrennungsgase (31) aus dem Brennkammerrohr (10) sorgt. Nach dem Brennkammerkopf (26) vermischen sich der Abgasstrom aus der Gas- oder Heizölverbrennung (31) mit dem vorgewärmten Frischluftstrom (30) im Diffusor (11) und im anschließenden Mischraum (12) der Heißluftdüse (15) zum Mischluftstrom (32). Die nach der Mischzone (12) sich anschließende Heißluftdüse (15) geht in eine breite Auslaßdüse (16) über, die in Fig.: 3 näher dargestellt ist. Die Düse besitzt einen Eingang (17) mit einem anschließend parallelen Verlauf der Blechkanten zueinander (18) und einem sich erweiternden Teil (21), dessen Öffnungswinkel kleiner 6 grd beträgt. Zur Führung der Heißluftdüse (15) sind an der Warmluftmischeinrichtung (2) die hydraulischen Zylinder der Hub- und Absenkvorrichtung (19), die auch aus Seilen bestehen kann, und die Laufrollen (20) an der Heißluftdüse (15) angebracht.

Im oberen Teil der Heißluftdüse (15) sitzt ein Temperaturfühler (14), der über den Regler (23) mit einem Stellmotor (13) verbunden ist.

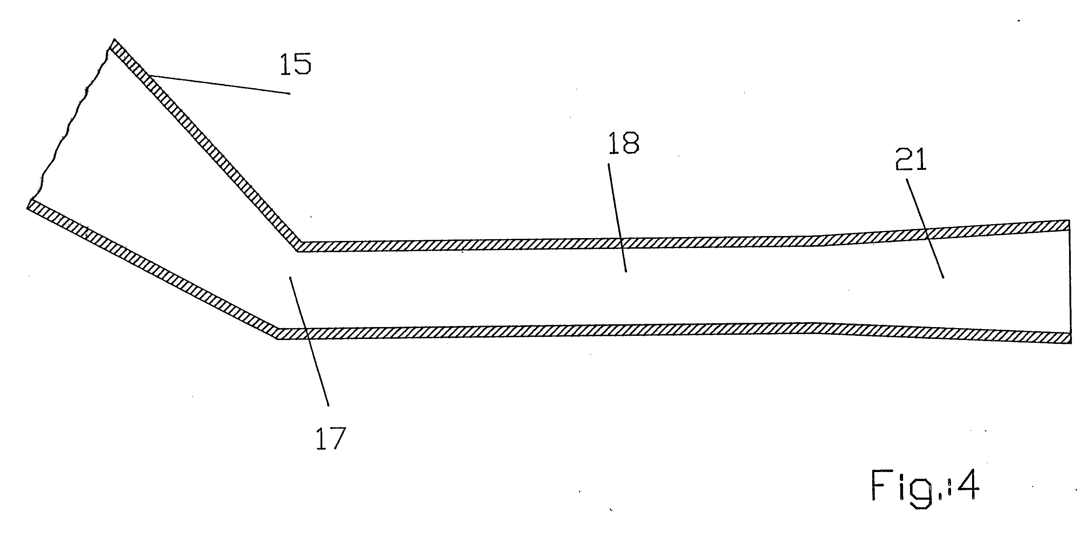

Je nach Wahl des Einsatzzweckes kann die Form und der Anströmwinkel des Untergrundes zu der Heißluftdüse schwanken. Die Figuren 4 bis 12 zeigen die unterschiedlichen Ausführungsmöglichkeiten der Düsenform. In der Fig.:11 sind mehrere Heißluftdüsen über einen Verbindungskanal (37) zu einer größeren Düseneinheit zusammengefaßt worden. In der Fig.: 12 ist das Brenner rohr weiter nach vorne und dem rechteckigen Düsenaustritt angepaßt worden, wodurch sich die Mischzone der beiden Gasströme hinter die Düse verlagert. Fig.: 13 zeigt eine Düsenform, bei der die Absenkung der Temperatur des Gassstromes über eine Abstrahlfläche (36) erfolgt.

In einem speziellen Ausführungsbeispiel werden die Besonderheiten des erfindungsgemäßen Verfahrens näher beschrieben.

Zum Abtrocknen einer nassen Straße wird für die nachfolgenden Straßenbauarbeiten ein Straßentrocknungsfahrzeug eingesetzt. Dieses besteht aus einem Trägerfahrzeug (1) mit einer darauf fest installierten Warmluftmischeinrichtung (2) mit einer Heißluftdüse, die seitlich im Schnitt der Fig.:2 zu sehen ist.

Der Axialventilator (3) mit einer Frischluftstromleistung von ca. 9000 m3/h wird gestartet. Dabei strömt die ca. 10-grädige angesaugte Frischluft (30) zunächst über das Gebläse (3) durch den Zufuhrstutzen (4) in den Ringraum (6) ein.

Nach dem Start des Axialventilators (3) wird der Öl-Gebläsebrenner (7) ingang gesetzt. Er hat eine max. Leistung von 800 kW. Der Ölstrom von ca. 66.8 kg/h verbrennt zusammen mit der über den Gebläseventilator (9) angesaugten Verbrennungsluft (35) von ca. 10000 m3/h zu einem Abgasstrom (31) von ca. 11000 m3iN/h im Brennkammerrohr (10). Der Öl- Gebläsebrenner (7) hat einen Druckverlust von ca. 2000 PA und am Ende des Brennkammerkopfes (26) ist diese Pressung abgebaut worden, so daß an dieser Stelle kein Überdruck mehr vorhanden ist.

Durch den konzentrischen Frischluftstrom (30) im Ringraum (6) der Warmluftmischeinrichtung (2) wird das Brennkammerrohr (10) und der Brennkammerkopf (26) gekühlt. Damit die hohe Pressung im Ringraum von ca. 3500 PA die Flamme im Brennkammerrohr (10) nicht erstickt, wird der Frischluftstrom (30) über eine Einschnürung (29) des Hüllrohres (28) auf ca. 85 m/s beschleunigt. Dadurch wird soviel Druckenergie in Geschwindigkeit umgesetzt, daß am Ende des Brennkammerkopfes (26) ein Unterdruck entsteht.

Zu Beginn der Heißluftdüse (15) wird der Strömungsraum im Mischraum (12) absatzartig vergrößert. Dadurch wird die Turbulenz vergrößert und der Frischluftstrom (30) vermischt sich mit dem Abgasstrom (31) zu einen ca. 300 grädigen Mischluftstrom (32) von ca. 11000 m3/h.

Mit einer Geschwindigkeit von ca. 60m/s und einem Anströmwinkel von ca. 10 grd strömt der Mischluftstrom (32) aus der Auslaßdüse (16) über die feuchte Straßenoberfläche. Dabei entwickelt er einen zur Straße hin gerichteten Unterdruck, der bewirkt, daß der Warmluftstrom sich auf eine Länge von ca. 5 m in Fahrtrichtung nicht über eine Höhe von 0,4 m über Fahrbahnhöhe erstreckt. Durch diesen Effekt wird die im Mischluftstrom (32) steckende Wärmeenergie mit einem großen Wirkungsgrad in den erforderlichen Abtrocknungsprozeß übertragen.

Ein weiteres Ausführungsbeispiel soll das erfindungsgemäße Verfahren näher beschrieben.
Zum Abtrocknen eines nassen Bürgersteiges für nachfolgende Arbeiten wird ein Trocknungsfahrzeug mit einer Warmluftmischeinrichtung (2), die in Fig.: 3 seitlich zu sehen ist, eingesetzt.

Der Axialventilator (3) mit einem Frischluftstrom von ca. 1500 m3/h wird gestartet. Dabei strömt die ca. 10-grädige angesaugte Frischluft durch den Ventilator und den Zufuhrstutzen (4) in den Ringraum (6) der Warmluftmischeinrichtung ein.

Nach dem Start des Axialventilators (3) wird der Öl-Gebläsebrenner (7) ingang gesetzt. Er hat eine max. Leistung von 200 kW. Der Ölstrom von ca. 16.7 kg/h verbrennt zusammen mit der ca. 270 kg/h Verbrennungsluft zu einem Abgasstrom von ca. 230 m3iN/h. Der Ölgebläsebrenner (7) hat einen Druckverlust von ca. 600 Pa.

Der Luftstrom von 1500 m3/h umströmt das Brennkammerrohr und kühlt es dabei im Ringraumbereich (6). Im unteren Bereich der Warmluftmischeinrichtung wird der Luftstrom nach oben gelenkt und mit einer Geschwindigkeit von ca. 30 m/s verläßt er über die Auslaßdüse die Warmluftmischeinrichtung (2). Durch die hohe Austrittsgeschwindigkeit wird hinter der Düse ein Unterdruck erzeugt, der die heißen Abgase aus dem Brennkammerrohr (10) ansaugt. Die beiden Gasströme vermischen sich und erzeugen gleichzeitig aufgrund ihrer hohen Geschwindigkeit von ca. 20 m/s, mit der sie bis zu 5 m hinter der Austrittsdüse über die Straßenoberläche strömen, einen zur Straße hin gerichteten Unterdruck. Der turbulente Warmluftstrom trocknet den Bürgersteig mit einer Arbeitsgeschwindigkeit von ca. 4 m/min ab.

Ein weiteres Ausführungsbeispiel soll die erfindungsgemäße Vorrichtung näher erläutern.

Durch einen Axialventilator (3) mit einer Gesamtlänge von 1000 mm und einem Durchmesser von 500 mm wird Luft angesaugt und über einen Zufuhrstutzen (4) mit dem gleichen Durchmesser unter einem Winkel von 40 grd mittig in den Ringraum (6) der Warmluftmischeinrichtung (2) geleitet. Der Ringraum (6) hat einen äußeren Durchmesser von 500 mm, einen inneren Durchmesser von 280 mm und eine Länge von ca. 920 mm. Das Hüllrohr (28) verengt sich auf einer Länge von 85 mm von einem Durchmesser 500 auf einen Durchmesser 350 mm.

Danach erweitert sich das Hüllrohr (28) unter einem Winkel von 6 grd diffusorartig wieder auf einer Länge von 500 mm. Zentrisch in der Warmluftmischeinrichtung (2) liegt das Brennkammerrohr (10) Es hat einen Durchmesser von 280 mm und ein Länge von ca. 500 mm. Über das Brennkammerrohr (10) ist der Brennkammerkopf (26) gezogen, der an seinem Ende eine konische Erweiterung auf einen Durchmesser von 350 mm hat. An diese Erweiterung schließt sich ein ca. 100 mm langes Rohrstück (34) mit einem Durchmesser von 350 mm an.

An den Diffusor (11) der Warmluftmischeinrichtung (2) wird die Heißluftdüse (15) angeflanscht. Sie besitzt anfangs im Mischraum einen quadratischen Querschnitt mit einer Seitenlänge von 460 mm. Danach erweitert sie sich gleichförmig auf 2500 mm Breite und verjüngt sich dabei bis zum Eintritt in die Auslaßdüse (16) auf eine Höhe von 20 mm. Die Auslaßdüse (16) besitzt anfangs 2 parallelverlaufende Bleche auf einer Länge von ca. 100 mm, die in einem Abstand von 20 mm liegen. Danach erweitern sie sich auf einer Länge von 50 mm in einem Winkel von 6 grd. Die Auslaßdüse (16) knickt am unteren Ende der Heißluftdüse (15) um ca. 25 grd ab.

Ein weiteres Ausführungsbeispiel soll die Besonderheiten der erfindungsgemäßen Vorrichtung näher erläutern.

Durch einen Axialventilator, der mittig unterhalb des Trägerfahrzeugs (1) angeordnet ist, und eine Gesamtlänge von 480 mm und einen Durchmesser von 250 mm hat, wird Umgebungsluft angesaugt und über einen Zuführstutzen (4) mittig in die Warmluftmischeinrichtung (2) geleitet. In der Warmluftmischeinrichtung (2), deren obere Abmessungen 500x400x400 betragen, wird das Brennkammerrohr (10), das einen Durchmesser von 200 mm hat, von der angesaugten Luft umströmt. Im unteren Teil der Warmluftmischeinrichtung geht das runde Brennkammerrohr in einen rechteckigen Kanal mit den Maßen 800x20 und der Länge 200 mm über. Oberhalb des Abgaskanals liegt der Kanal für die Frischluft, der ebenfalls die Abmessungen 800x20 und eine Länge 200 mm annimmt. Beide Kanäle sind durch ein Blech getrennt. Am Austritt der jeweiligen Kanäle erweitern diese sich um 6 grd. die Warmluftmischeinrichtung ist so auf dem Trägerfahrzeug montiert, daß sie mit dem Bodenuntergrund einen Winkel von 45 grd bildet.

## Ansprüche

1. Verfahren zum Trocknen, Erwärmen, Auftauen und Reinigen von Freiluftflächen mittels Warmluft dadurch gekennzeichnet, daß in einer Warmluftmischeinrichtung (2) zentrisch ein heißer Abgasstrom (31) mit geringem Druck mit einem konzentrischen kalten Frischluftstrom (30), dessen höherer Druck durch geregelte Geschwindigkeitserhöhung zu einem geringen Unterdruck in dem Maße umgesetzt wird, daß der heiße Abgasstrom (31) abgesaugt und daß dadurch eine gute Verbrennung im Brennkammerrohr (10) ermöglicht wird, gemischt wird und daß dieser Mischluftstrom (32) mit hoher Geschwindigkeit und schräg geneigt so breitflächig über die Freiluftfläche geblasen wird, daß er durch eine selbstansaugende Wirkung lange Zeit in Bodennähe haften bleibt.

2. Verfahren nach Anspruch 1, dadurch gekennzeichnet, daß der heiße Gasstrom (31) durch einen Gas- oder Ölbrenner (7), vorzugsweise Ölbrenner, erzeugt wird.

3. Verfahren nach Anspruch 1, dadurch gekennzeichnet, daß der konzentrische Frischluftstrom (30) vor der Einschnürung (29) des Hüllrohres (28) der Warmluftmischeinrichtung (2) eine Pressung zwischen 500 und 4000 Pa hat, die durch ein Axialgebläse (3) erzeugt wird.

4. Verfahren nach den Ansprüchen 1 und 3, dadurch gekennzeichnet, daß durch Beschleunigung des Frischluftstromes (30) auf 60 bis 120 m/s durch Einschnürung (29) des Hüllrohres (28) ein lokaler Unterdruck erzeugt wird, der den heißen Abgasstrom (31) aus dem Brennkammerrohr (10) und dem Brennkammerkopf (26) absaugt.

5. Verfahren nach den Ansprüchen 1 und 4, dadurch gekennzeichnet, daß optimale Ausbrennverhältnisse im Brennkammerrohr (10) durch Einstellung des Unterdruckes mit der Einstellvorrichtung (25), die den Ringspalt für die Kaltluft am Brennerrohrende verändert, am Ende des Brennkammerkopfes (26) erreicht wird.

6. Verfahren nach Anspruch 1, dadurch gekennzeichnet, daß durch Veränderung der Strömungsgeschwindigkeit des Mischluftstromes (32) beim absatzartigen Übergang von der Warmluftmischenrichtung (2) zur Heißluftdüse (15) zusätzliche Turbulenzen erzeugt werden, die den Frischluftstrom (30) und den Abgasstrom (31) zu einem homogenen Mischstrom (32) vermischen.

7. Verfahren nach den Ansprüchen 1 und 6, dadurch gekennzeichnet, daß der Mischluftstrom (32) mit einer Geschwindigkeit von 30 bis 60 m/s und einem Anströmwinkel zwischen 5 und 30 grd aus der Auslaßdüse (16) austritt und so über die Freiluftfläche strömt, daß der Strahl durch seine selbstansaugende Wirkung in einem Bodenbereich von 3 bis 5 m Länge und einer Höhe von ca. 0.4 m haften bleibt.

8. Verfahren nach Anspruch 1, dadurch gekennzeichnet, daß der Mischluftstrom (32) mit einer Geschwindigkeit von 30 bis 60 m/s und einem Anströmwinkel zwischen 45 und 85 grd so auf die Freiluftfläche gerichtet ist, daß er die Fläche von Partikeln säubert.

9. Verfahren nach den Anspruch 1, dadurch gekennzeichnet, daß die Warmluftmischeinrichtung (2) auf dem Trägerfahrzeug (1) um mindestens 90 grd schwenkbar ist.

10. Verfahren nach Anspruch 1, dadurch gekennzeichnet, daß die Temperaturregelung des Mischluftstromes (32) über eine Regelung des Frischluftstromes (30) durch Änderung der Klappenstellung von der dem Axialgebläse (3) nachgeordneten Drosselklappe (5) oder durch gebläsespezifische Einrichtungen, wir Drehzahländerungen oder Verstellung des Flügelwinkels, oder mehrstufigen Betrieb des Brenners (7) erfolgt und daß der Temperaturbereich des Mischluftstromes (32) zwischen 80 und 350 grdC liegt.

11. Verfahren nach Anspruch 1, dadurch gekennzeichnet, daß die Nachtrocknung der Freifläche über eine Strahlungsfläche (36) erfolgt.

12. Vorrichtung zur Durchführung des Verfahrens, dadurch gekennzeichnet, daß eine Transporteinrichtung (1) eine Warmluftmischeinrichtung (2) trägt, die zentrisch auf der einen Seite einen Gebläsebrenner (7) besitzt, und die aus einem Hüllrohr (28), einem Frischluftzufuhrstutzen (4) mit Axialventilator (3), einem Brennkammerrohr (10), einem Brennkammerkopf (26), einer Brennkammerkopfeinstellvorrichtung (25), einer Kipp- und Drehvorrichtung (24), einer Absenk-oder Hubvorrichtung (19), einer Einschnürung (29) und einem Diffusor (11) besteht, an dem über einen Flansch eine Warmluftdüse (15) sitzt, die an der Ankoppelstelle einen größeren Flächenquerschnitt als der Diffusor (11) hat, und die eine Fahrrolle (20) und eine Auslaßdüse (16) besitzt.

13. Vorrichtung nach Anspruch 12, dadurch gekennzeichnet, daß die Warmluftmischeinrichtung (2) seitlich auf dem Transportfahrzeug (Fig.:2) oder mittig (Fig.:3) sitzen kann.

14. Vorrichtung nach Anspruch 12, dadurch gekennzeichnet, daß der Luftzufuhrstutzen (4) für die Frischluft (30) an der Warmluftmischeinrichtung (2) unter einem Winkel zwischen 20 und 70 grd sitzt.

15. Vorrichtung nach Anspruch 12, dadurch gekennzeichnet, daß die Warmluftmischeinrichtung (2) zentrisch ein Brennkammerrohr (10) besitzt, an dessen einem Ende der Gebläsebrenner (7) sitzt und an dessen anderem Ende sich der Brennkammerrohrkopf (26) befindet.

16. Vorrichtung nach den Ansprüchen 12 und 15, dadurch gekennzeichnet, daß der Brennkammerrohrkopf (26) aus einem Rohr (33), einer sich daran anschließenden konischen Erweiterung (27) und einem sich daran anschließenden geraden Rohrstück (34) besteht.

17. Vorrichtung nach Anspruch 12, dadurch gekennzeichnet, daß das Hüllrohr (28) der Warmluftmischeinrichtung (2) unter einen Winkel zwischen 30 und 60 grd eingeschnürt wird.

18. Vorrichtung nach den Ansprüchen 12 und 15, dadurch gekennzeichnet, daß sich das Hüllrohr (28) nach der Einschnürung (29) unter einem Winkel von weniger als 6 grd wieder erweitert.

19. Vorrichtung nach den Ansprüchen 12 und 16, dadurch gekennzeichnet, daß der Brennkammerkopf (26) mehr als 100 mm über die Einschnürung (29) hinaus in den Diffusor (11) der Warmluftmischeinrichtung (2) ragt.

20. Vorrichtung nach Anspruch 12, dadurch gekennzeichnet, daß die Querschnittsfläche des Mischraumes (12) der Heißluftdüse (15) 50 % bis 150 % größer ist als die Austrittsfläche des Diffusors (11) der Warmluftmischeinrichtung (2).

21. Vorrichtung nach Anspruch 12, dadurch gekennzeichnet, daß die Heißluftdüse (15) eine Auslaßdüse (16) besitzt, die aus einem 100 bis 150 mm langen, parallelverlaufenden Teil (18) und einem 50 bis 100 mm langen, sich um 6 grd erweiternden Teil (21) besteht.

22. Vorrichtung nach Anspruch 21, dadurch gekennzeichnet, daß die Auslaßdüse (16) unter einem Winkel zwischen 15 und 40 grad von der Heißluftdüse (15) abknickt.

23. Vorrichtung nach Anspruch 12, dadurch gekennzeichnet, daß die Hub- und Absenkvorrichtung (19) sowohl ein hydraulischer Zylinder als auch eine elektrische oder manuelle Seilzugvorrichtung als auch ein elektrisch oder manuell zu betätigendes Gestänge sein kann.

24. Vorrichtung nach Anspruch 12, dadurch gekennzeichnet, daß eine Temperaturmeßeinrichtung (14) im warmen Mischluftstrom (32) mit einem Regler (23) verbunden ist, der eine einstellende Verbindung zur Stelleinrichtung der Frischluftstromregelung hat.

25. Vorrichtung nach Anspruch 12, dadurch gekennzeichnet, daß das Brennkammerrohr (10) bis zur Auslaßdüse (16) verlängert ist (Fig.:12).

26. Vorrichtung nach Anspruch 12, dadurch gekennzeichnet, daß die Warmluftmischeinrichtung (2) auf der Unterseite eine Strahlungsfläche (33) besitzt (Fig.:12).

27. Vorrichtung nach den Ansprüchen 12, 21, 22, 25, und 26, dadurch gekennzeichnet, daß die Gestaltung der Auslaßdüse (16) sowohl glatt (Fig.:5) als auch pflugförmig (Fig.:6) als auch einseitig (Fig.:7) als auch gebogen (Fig.:8) sein kann.

28. Vorrichtung nach den Ansprüchen 12 und 27, dadurch gekennzeichnet, daß die Gestaltung der Heißluftdüse (15) derart sein kann, daß sie eine Austrittsdüse (16) mit einem flachen Mischstromaustrittswinkel (5 bis 20 grd) oder einen steilen Mischstromaustrittswinkel (45 bis 85 grd) hat (Fig.:10).

29. Vorrichtung nach Anspruch 12, dadurch gekennzeichnet, daß die Gestaltung der Heißluftdüse (15) derartig sein kann, daß sie eine Austrittsdüse (16) mit einem flachen Mischstromaustrittswinkel (5 bis 20 grd) und gleichzeitig eine Austrittsdüse (16) mit einem steilen Mischstromaustrittswinkel (45 bis 85 grd) hat (Fig.:9).

30. Vorrichtung nach Anspruch 12, dadurch gekennzeichnet, daß die Dreh- und Kippvorrichtung (24) der Warmluftmischeinrichtung (2) auf dem Trägerfahrzeug (1) sowohl elektrisch als auch manuell mit einen Seilzug oder ein Gestänge, als auch hydraulisch oder pneumatisch als auch mit einen Stellmotor versehen sein kann.

31. Vorrichtung nach Anspruch 12, dadurch gekennzeichnet, daß zwischen dem Axialgebläse (3) und der Warmluftmischeinrichtung (2) eine Drosselklappe (5) sitzt.

32. Vorrichtung nach den Ansprüchen 12 und 16, dadurch gekennzeichnet, daß am Rohr des Brennkammerkopfes (33) eine Einstellvorrichtung (25) angebracht ist.

33. Vorrichtung nach den Ansprüchen 12, 26, 27 und 28, dadurch gekennzeichnet, daß mehrere Warmlufteinheiten (2) zu einer größeren Einheit zusammengefaßt werden können.

Fig. 1

Fig. 2

EP 0 340 692 A1

EP 0 340 692 A1

Fig. 3

Fig. 4

15

18

21

17

EP 0 340 692 A1

Fig.5

EP 0 340 692 A1

16

15

12

EP 0 340 692 A1

Fig.6

Fig.7

21

18

15

EP 0 340 692 A1

Fig. 8

Fig. 9

Fig. 10

16

18

21

1

37

15

EP 0 340 692 A1

Fig. 11

Fig.12

Fig. 13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 334 202 (HEIREND) * Insgesamt * | 1,2,6, 13-15, 23,31 | E 01 C 23/14 E 01 H 5/10 F 24 H 3/04 |
| Y |  | 11,26, 27,33 |  |
| A |  | 10,12 |  |
| Y | US-A-2 820 450 (ZIMMERMAN) * Insgesamt * | 11,26 |  |
| A |  | 1,2,12, 13,27 |  |
| Y | US-A-3 136 488 (PETLAK) * Figuren * | 27 |  |
| A |  | 1,2 |  |
| Y | GB-A-1 513 330 (MILLER) * Insgesamt * | 33 |  |
| A |  | 1,2,10, 12,13, 27,31 | RECHERCHIERTE SACHGEBIETE (Int. Cl.4) |
| X | US-A-3 291 118 (WILSON) * Insgesamt * | 1,2,9, 13,15, 27,33 | E 01 H E 01 C F 24 H F 23 C |
| A |  | 12 |  |
| P,X | DE-U-8 805 194 (KOLB) * Insgesamt * | 1-33 |  |
| A | DE-A-2 719 017 (HIEMER) |  |  |

Der vorliegende Recherchenbericht wurde für alle Patentansprüche erstellt

| Recherchenort | Abschlußdatum der Recherche | Prüfer |
|---|---|---|
| DEN HAAG | 14-07-1989 | DIJKSTRA G. |

EPO FORM 1503 03.82 (P0403)